# EUROPÄISCHE PATENTSCHRIFT

(11) **EP 1 827 808 B1**
(45) Veröffentlichungstag und Bekanntmachung des Hinweises auf die Patenterteilung: **14.01.2009**
(21) Anmeldenummer: 05801875.5
(22) Anmeldetag: 09.11.2005
(51) Int. Cl.: B29D 30/26, B29D 30/36, B29D 30/24

(54) **VERFAHREN UND VORRICHTUNG ZUM AUFBAUEN EINES RADIALREIFENS**
METHOD AND DEVICE FOR CONSTRUCTING A RADIAL TYRE
PROCEDE ET DISPOSITIF POUR FABRIQUER UN PNEU RADIAL

(30) Priorität: 04.12.2004 DE 102004058522
(43) Veröffentlichungstag der Anmeldung: 05.09.2007
(73) Patentinhaber: Continental Aktiengesellschaft, D-30165 Hannover (DE)
(72) Erfinder: SEEVERS, Jörn, 31303 Burgdorf (DE); THOMFOHRDE, Claudia, 38542 Leiferde (DE); WINKLER, Jens, 30900 Wedemark (DE)
(74) Vertreter: Finger, Karsten
(86) Internationale Anmeldenummer: PCT/EP2005/011958
(87) Internationale Veröffentlichungsnummer: WO 2006/058599

(56) Entgegenhaltungen:
- EP-A- 0 433 974
- EP-A- 0 468 738
- EP-A- 1 457 309
- GB-A- 997 253
- GB-A- 1 181 073
- GB-A- 1 383 532
- GB-A- 1 407 115
- US-A- 3 152 031
- US-A- 3 674 604
- US-A- 4 288 265
- US-B1- 6 234 227

## Beschreibung

Die Erfindung betrifft ein Verfahren zum Aufbauen eines Radialreifens mit den Schritten
- Aufbau eines Gürtelpaketes aus mindestens zwei insbesondere automatisch gespleißten Gürtellagen auf einer einen zylindrischen Außenumfang aufweisenden, segmentierten Gürtelaufbautrommel,
- Aufbau eines eine luftdichte Innenschicht, zumindest eine Karkasseinlage und zwei Wulstkerne mit Kernprofilen aufweisenden Karkassschlauches auf einer separaten Aufbautrommel,
- transferieren des Karkassschlauches auf eine weitere, segmentierte Bautrommel, an welche seitlich in axialer Richtung bewegbare Balgträger mit aufblähbaren Bälgen anschließen,
- Transferieren des Gürtelpaketes zur weiteren Bautrommel und Positionieren desselben über dem Karkasschlauch.

Die Erfindung betrifft ferner eine Vorrichtung zum Aufbau eines Radialreifens mit
- einer einen zylindrischen Außenumfang aufweisenden, segmentierten Gürtelaufbautrommel,
- einer separaten Aufbautrommel zum Aufbau eines Karkassschlauches aus zumindest einer luftdichten Innenschicht, einer Karkasseinlage und zwei Wulstkernen mit Kernprofilen,
- einer Transfereinrichtung zum Transferieren des Gürtelpaketes von der Gürtelaufbautrommel zu einer weiteren, segmentierten Bautrommel,
- auf welcher der Karkassschlauch und das fertige Gürtelpaket zusammenfügbar sind,
- wobei seitlich der weiteren Bautrommel axial bewegbare Balgträger angeordnet sind.

Bei der konventionellen Fertigung von Radialreifen für Personenkraftwagen erfolgt die Konturierung des aus mindestens zwei Gürtellagen bestehenden Stahlgürtels im Allgemeinen erst während der Vulkanisation des Reifens durch die Einformung des auf zylindrischen Aufbautrommeln aufgebauten Reifenrohlings mittels eines im Inneren des in die Reifenheizform eingebrachten Reifenrohlings aufgeblähten Balg. Dabei werden dem Gürtel und dem Laufstreifen ihre endgültige Kontur verliehen, wobei die Erhebung bzw. Ausdehnung des Gürtels im Zenit des Reifens größer ist als in den Schulterbereichen. Über den Reifenquerschnitt erfolgt auf diese Weise eine ungleichmäßige Dehnung des Materials im Reifen, insbesondere der Festigkeitsträger in den Gürtellagen. Diese ungleichmäßige Dehnung hat eine Materialverschiebung der Gürtellagen relativ zu den sie umgebenen Bauteilen zur Folge, insbesondere eine Änderung des Winkels der Festigkeitsträger in den Gürtellagen über dem Reifenquerschnitt und ein Einspringen der Gürtelkanten radial innerhalb der auf den Gürtel aufgebrachten Bandage.

Bekannt sind ferner Verfahren und Vorrichtungen zum Aufbau eines Reifenrohlings auf einem segmentierten, stabilen Kern, dessen Außenfläche der Innenfläche des zu bildenden Reifens zumindest im Wesentlichen entspricht. Diesbezüglich wird beispielsweise auf die US 5,6.16,209 und die WO 03/05566 A verwiesen. Die meisten Bauteile des Reifens werden dabei aus streifenförmigen Kautschukmischungen und aus textilen oder metallischen Fäden durch Aufbringen mittels besonderer Vorrichtungen erstellt. Der Reifen wird mitsamt dem stabilen Kern und daher balglos geheizt, es findet somit auch keine Resterhebung während der Vulkanisation statt. Diese Verfahren sind technisch sehr aufwändig, schwer reproduzierbar und nur bedingt wirtschaftlich.

Aus der GB-A-1407115 sind ein Verfahren und eine Vorrichtung zum Aufbauen eines Radialreifens bekannt, bei welchem bzw. bei welcher auf einer Zwischentrommel die Karkasse aufgebaut wird und anschließend eine Einheit bzw. ein Paket aus Gürtellagen und Laufstreifen über der Karkasse positioniert wird. Durch Expansion der Zwischentrommel wird die Querschnittskontur der Karkasse entsprechend angepasst. Es wird daher die Karkasse in das Paket aus Gürtellagen und Laufstreifen expandiert, welches dabei gedehnt wird, wodurch eine Verbindung zwischen der Karkasse und den Gürtellagen mitsamt Laufstreifen erzielt wird. Dabei soll die Karkasse gemäß ihrer Kontur im fertigen Reifen verformt werden.

Bei der Herstellung von Radialreifen für LKW ist es bekannt, den Gürtel auf konventionelle Weise auf einer entsprechend der erwünschten Kontur des Gürtelpaketes bereits konturierten Bautrommel aufzubringen. Die Gürtellagen können jedoch bei diesem Aufbauverfahren nur manuell gespleißt werden, da der Spleiß der überlappenden Endabschnitte jeder Gürtellage nicht über die gesamte Bautrommelbreite unterstützt werden kann.

Der Erfindung liegt die Aufgabe zu Grunde, bei einem Verfahren und einer Vorrichtung der eingangs genannten Art sicherzustellen, dass bereits beim Aufbau des Reifens ein konturierter Gürtel erstellt werden kann, wobei das Verfahren automatisch ablaufen soll und insbesondere das automatische Spleißen der Gürtellagen ermöglichen soll.

Was das Verfahren betrifft wird die gestellte Aufgabe erfindungsgemäß dadurch gelöst, dass die weitere Bautrommel an ihrer Außenseite abgestimmt auf die oder ähnlich der vorgesehene(n) Querschnittskontur des Gürtelpaketes im fertigen Reifen eine runde Querschnittskontur aufweisend geformt ist, wobei der Normalabstand der Außenseite der Segmente zur Achse der Bautrommel im Zenit am größten und in den seitlichen Berechen am kleinsten ist, und dass der Karkassschlauch durch Expansion der weiteren Bautrommel mit dem Gürtelpaket derart zusammengefügt wird, dass das Gürtelpaket durch die Bautrommel und / oder eine von außen mit dem Gürtelpaket in Kontakt bringbare Einrichtung konturiert bzw. geformt wird.

Was die Vorrichtung betrifft wird die gestellte Aufgabe erfindungsgemäß dadurch gelöst, dass die weitere Bautrommel an ihrer Außenseite abgestimmt auf die oder ähnlich der Kontur des Gürtelpaketes im fertigen Reifen eine runde Querschnittskontur aufweisend geformt ist, wobei der Normalabstand der Außenseite der Segmente zur Achse der Bautrommel im Zenit am größten und in den seitlichen Berechen am kleinsten ist, und dass der Karkassschlauch bei expandierter Bautrommel mit dem Gürtelpaket unter Verformung desselben zusammenfügbar ist.

Die Erfindung ermöglicht auf einfache Weise ein weitgehend verzerrungsfreies Ausformen des Gürtels bereits während des Reifenaufbaues. Bei der nachfolgenden Vulkanisation des Reifens wird daher beim Einformen des Rohreifens das Stahlgürtelpaket im Wesentlichen gleichmäßig gedehnt. Das erfindungsgemäße Verfahren und die erfindungsgemäße Vorrichtung lassen sich auf einfache Weise in ein herkömmliches Aufbauverfahren bzw. in herkömmliche Aufbauvorrichtungen einfügen.

Bei einer bevorzugten Ausführungsform der Erfindung ist vorgesehen, dass durch die auf das Gürtelpaket von außen einwirkende Einrichtung das Gürtelpaket zumindest Schulterseitig konturiert bzw. geformt wird. Damit lässt sich auf Bei einer bevorzugten Ausführungsform der Erfindung ist vorgesehen, dass durch die auf das Gürtelpaket von außen einwirkende Einrichtung das Gürtelpaket zumindest Schulterseitig konturiert bzw. geformt wird. Damit lässt sich auf besonders rationelle Weise das vorerst zylindrische Gürtelpaket entsprechend der Außenkontur der weiteren Bautrommel konturieren.

Bevorzugt ist diese Einrichtung eine das Gürtelpaket umhüllende, insbesondere aufblasbare Gummimanschette oder dergleichen, deren Innenseite im aufgeblasenen Zustand eine der erwünschten Querschnittskontur des Gürtelpaketes entsprechende Kontur annimmt. Mit einer derartigen Einrichtung lässt sich das Gürtelpaket auf eine unkomplizierte und einfache Weise konturieren. Von Vorteil ist es bei dieser Einrichtung, dass sie an der Transfereinrichtung angeordnet werden kann.

Die Kernklemmvorrichtungen werden während der Expansion der Bautrommel seitlich an diese herangefahren, dabei wird die Bewegung der Kernklemmvorrichtungen mit der Expansionsbewegung der Bautrommel synchronisiert. Dadurch kann gleichzeitig sichergestellt werden, dass die Karkasseinlage während der Expansion der Bautrommel geregelt unter Spannung gesetzt wird.

Ein besonderer Vorteil des erfindungsgemäßen Verfahrens besteht darin, dass die Spulbandage auf einen bereits konturierten Gürtel aufgebracht werden kann. Es ist demnach möglich, auch die Spulbandage sozusagen "endkonturnah" aufzubringen und damit auf einfache Weise die erwünschte Bandagenspannung sicherzustellen. Wie beim herkömmlichen Aufbauverfahren kann dabei die Spulbandage aus einem oder mehreren mit Festigkeitsträgern versehenen Materialstreifen und mittels eines Spulkopfes oder mehrerer Spulköpfe spiralig gewickelt werden.

Dabei können auch die beim herkömmlichen Reifenaufbau eingesetzten Einrichtungen verwendet werden, bei denen der Spulkopf oder die Spulköpfe zum spiraligen Wickeln des oder der Materialstreifen parallel zur Achse der rotierenden Bautrommel bewegt wird bzw. werden.

Eine bessere Spulqualität erreicht man dadurch, dass der Spulkopf oder die Spulköpfe zum spiraligen Wickeln des Materialstreifens in Reifenquerrichtung der Kontur des Gürtelpaketes folgend bewegt wird bzw. werden, wobei von zusätzlichem Vorteil ist, wenn der Spulkopf bzw. die Spulköpfe senkrecht zur Oberfläche konturierten Gürtelpaketes ausgerichtet werden. Dies erlaubt das Aufbringen der Spulbandage mit konstanter Spannung über die Materialbreite und damit eine besonders hochwertige und qualitativ gute Herstellung der Spulbandage.

In diesem Zusammenhang ist es von besonderem Vorteil, wenn die weitere Bautrommel an ihrer Außenseite derart geformt ist, dass beim Einformen des fertig aufgebauten Rohreifens in eine Vulkanisationsform die Resterhebung in den Schulterbereichen größer ist als im Zenitbereich. Damit kann auf den Rohreifen die Spulbandage mit konstanter Spannung aufgebracht werden, durch die unterschiedliche Resterhebung ergibt sich die erwünschte größere Spannung der Spulbandage in den Schulterbereichen.

Weitere Merkmale, Vorteile und Einzelheiten der Erfindung werden anhand der Zeichnung, die schematisch Ausführungsbeispiele der Erfindung darstellt, näher beschrieben. Dabei zeigen
Fig. 1 einen Teilquerschnitt durch einen PKW-Radialreifen,
Fig. 2a bis 2e schematische Darstellungen von Verfahrensschritten beim Aufbau eines Radialreifens und
Fig. 3a bis 3c Alternativen der Bewegung eines Spulkopfes zum Aufbringen einer Spulbandage während des Reifenaufbaues.

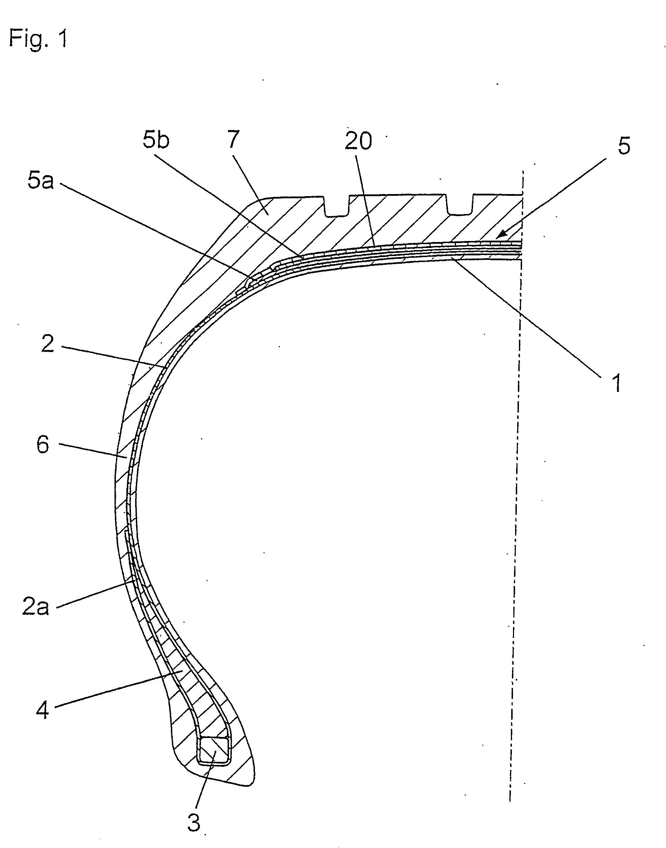

Der in Fig. 1 beispielhaft dargestellte Teilquerschnitt durch einen Radialreifen für Personenkraftwagen zeigt lediglich die Hauptbestandteile des Reifens, zu welchen eine luftdichte Innenseele 1, eine Karkasseinlage 2, Wulstbereiche mit Wulstkernen 3 und Kernprofilen 4, ein Gürtelpaket 5, welches beispielhaft zwei Gürtellagen 5a, 5b aufweist, ferner Seitenwände 6 und ein profilierter Laufstreifen 7 gehören. Bei der gezeigten Ausführung ist das Gürtelpaket 5 mit einer Bandage 20 bedeckt, die eine sogenannte Spulbandage ist und in bekannter Weise durch spiraliges Wickeln eines Materialstreifens erstellt worden ist. Die Karkasseinlage 2 eines PKW-Reifens weist üblicher Weise in eine Gummimischung eingebettete, insbesondere textile oder metallische Festigkeitsträger auf, die von Wulstbereich zu Wulstbereich verlaufen. Die Karkasseinlage 2 ist von innen nach außen um die Wulstkerne 4 herumgeführt, sodass ihre freien Endabschnitte die sogenannten Hochschläge 2a bilden, und kann auch zweilagig ausgeführt sein. Die Wulstkerne 3 können aus einem oder mehreren Stahlseil(en) bestehen, die auf ihnen sitzenden Kernprofile 4 sind Profile aus einer meist relativ harten Gummimischung. Bei der Reifenherstellung bzw. dem Aufbau des Reifens aus seinen Bauteilen werden die Wulstkerne 3 gemeinsam mit den noch unvulkanisierten Kernprofilen 4 als Einheit vorgefertigt. Diese Einheit kann mit einer ein- oder mehrlagigen äußeren Umhüllung aus einem gummierten Gewebe, sogenannten Wulstschutzstreifen, versehen sein.

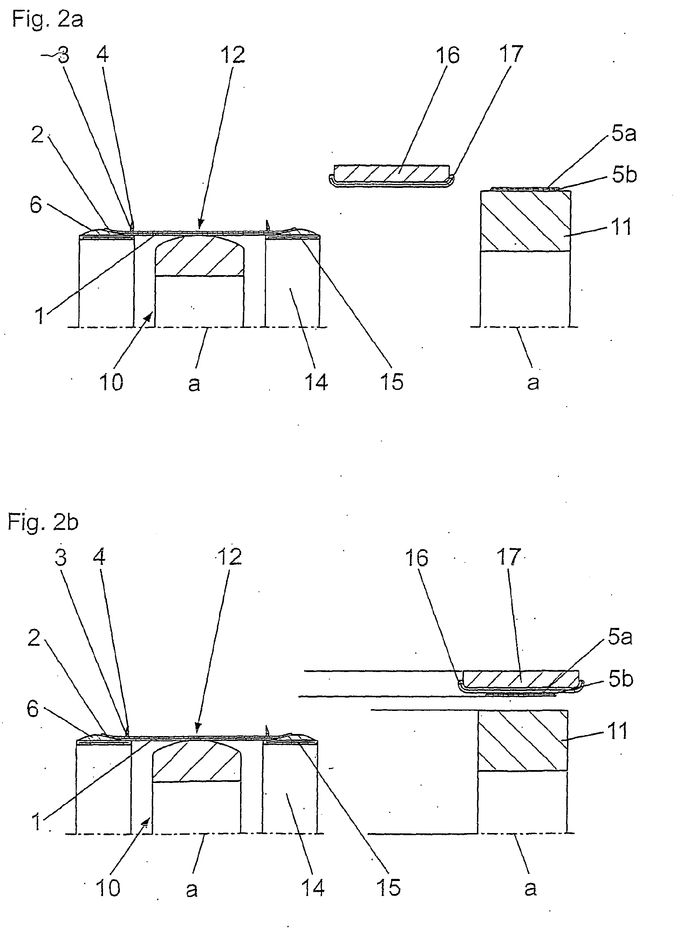

In Fig. 2a bis 2e ist jeweils in der linken Hälfte ein auf einer konturierten Bautrommel 10 ablaufender Aufbauschritt dargestellt, in der rechten Hälfte dieser Zeichnungsfiguren sind jeweils eine zylindrischen Gürteltrommel 11 und der hier gegebenenfalls erfolgende Aufbauschritt dargestellt. Die strichlierte Linie a verdeutlicht die Achse der Bautrommel 10 und die Achse der Gürteltrommel 11, d.h. unterhalb von a und spiegelbildlich zu a befinden sich die zweiten, nicht dargestellten Hälften der gezeichneten Einrichtungen, demnach auch die zweiten Hälften der Bautrommel 10 und der Gürteltrommel 11.

Bei einem gemäß der Erfindung ablaufenden Aufbauverfahren wird vorerst auf nicht gezeigte, insbesondere herkömmliche Weise und unter Verwendung einer herkömmlich ausgeführten Einrichtung, vorzugsweise einer zylindrischen Aufbautrommel, ein Karkassschlauch 12 aufgebaut und anschließend mittels einer nicht gezeigten Transfereinrichtung auf die Bautrommel 10 transportiert und dort an den Kern geklemmt. Der Karkassschlauch 12 besteht zumindest aus der Innenschicht 1, der Karkasseinlage 2 und den Wulstkernen 3 mit Kernprofilen 4. Wie gezeigt können bereits die Seitenwände 6 positioniert worden sein.

Die Bautrommel 10 ist eine segmentierte Trommel, sie weist daher über ihren Umfang eine Anzahl gleichartiger Segmente auf, deren Außenseiten die Außenseite der Trommel bilden und welche zur gleichmäßigen Vergrößerung und Verkleinerung des Aussendruchmessers in radialer Richtung bewegbar sind. Die Segmente können grundsätzlich in an sich bekannter Weise ausgeführt sein, mit dem Unterschied zu bekannten Ausführungen, dass die Außenseiten der Segmente derart geformt sind, dass im expandierten Zustand die Querschnittskontur der Segmente der Querschnittskontur des Gürtelpaketes 5 im fertigen Reifen weitgehend bzw. annähernd entspricht. Diese Querschnittskontur ist, wie Fig. 1 zeigt, eine runde Kontur, derart, dass der Normalabstand der Außenseite der Segmente zur Achse a im Zenit bzw. im Zenitbereich am größten und in den seitlichen Bereichen am kleinsten ist. Üblicherweise nimmt dieser Abstand vom Zenit ausgehend zu den Seiten ab, wobei die Kontur an sich auf verschiedene Weisen ausgelegt werden kann. Diese Auslegung ist jedoch nicht Gegenstand der Erfindung. Die Segmente der Bautrommel 10 können ferner derart ausgeführt sein, dass sie zumindest im nicht expandierten Zustand mit fingerartigen Fortsätzen oder dergleichen ineinander greifen. Des Weiteren kann die Bautrommel über ihren Außenumfang mit einer elastisch nachgiebigen Manschette umhüllt sein oder mit einem Druckluftanschluss. An den Seiten der Bautrommel 10 ist je eine Kernklemmvorrichtung bzw. Balgträger 14 positioniert und in Abstimmung mit den Expansions- und Einfahrbewegungen der Bautrommel 10 in Richtung der Achse a bewegbar. An der Außenseite jeder Kernklemmvorrichtung ist ein Balg 15 angeordnet. Die Bälge 15 sind dafür vorgesehen, in einem Aufbaustadium, das nicht Gegenstand der Erfindung ist, durch Aufblähen die seitlich der gesetzten Wulstkerne 3 befindlichen Abschnitte des Karkassschlauches 12 umzuschlagen und derart die Karkasshochschläge zu erstellen.

Auch die Gürteltrommel 11 ist auf insbesondere herkömmliche Weise segmentiert ausgeführt, die Außenseiten der Segmente bilden jedoch eine insgesamt zylindrische Trommelaußenseite.

Anhand der Fig. 2a bis 2c werden nun wesentliche Stadien beim Aufbau des Reifens beschrieben. Gemäß Fig. 2a ist der Karkassschlauch 12 auf der Bautrommel 10 positioniert und geklemmt, die Kernklemmvorrichtung 14 befinden sich in ihrer Ausgangslage und daher in einem Abstand von der Bautrommel 10. Die Gürteltrommel 11 ist auf einen größeren Außendurchmesser expandiert, wobei die Gürtellagen 5a, 5b bereits auf die Gürteltrommel 11 aufgebracht und vorzugsweise automatisch gespleißt worden sind. Eine Transfereinrichtung 16 befindet sich in Warteposition. Die Transfereinrichtung 16 trägt an ihrem Innenumfang eine ein- oder mehrteilige, aufblasbare Gummimanschette 17, deren Innenseite 17a im aufgeblähten Zustand die erwünschte Außenkontur des Gürtels annimmt.

An der Manschette 17 sind nicht dargestellte Greifelemente zum Erfassen des auf der Gürteltrommel 11 aufgebauten Gürtelpaketes 5 vorgesehen.

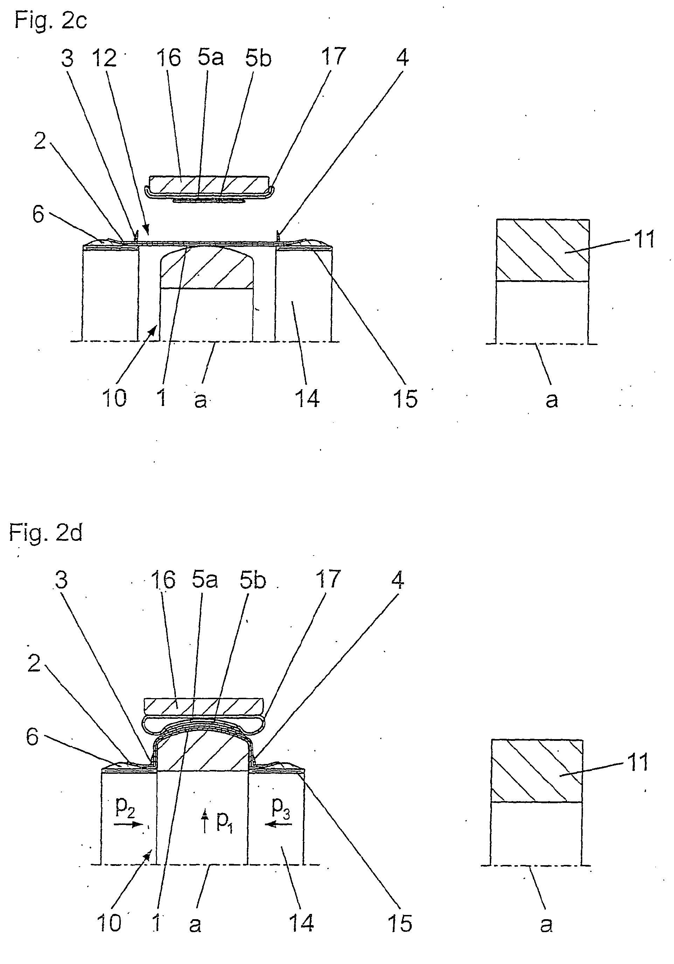

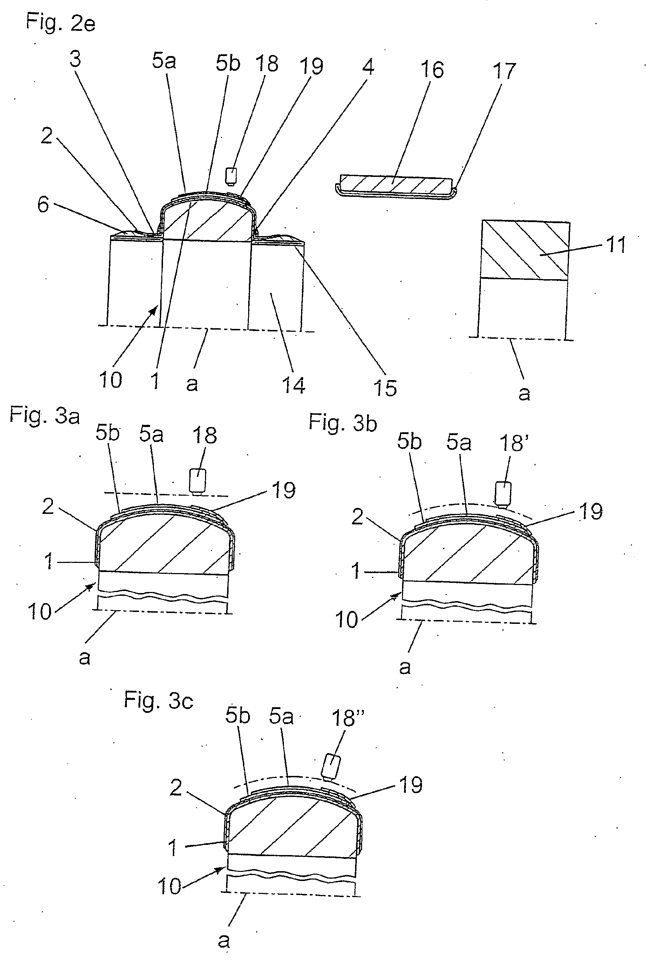

Fig. 2b zeigt den nächsten Aufbauschritt. Die Transfereinrichtung 16 ist über die Gürteltrommel 11 gefahren, hat das Gürtelpaket 5 aufgenommen, die Gürteltrommel 11 ist bereits eingefahren worden, um die Transfereinrichtung 16 mitsamt dem Gürtelpaket 5 von der Gürteltrommel 11 entfernen zu können. Fig. 2c zeigt ein nächstes Stadium, die Transfereinrichtung 16 ist über dem Karkassschlauch 12 positioniert worden, derart, dass sich das Gürtelpaket 5 mittig über der konturierten Bautrommel 10 befindet. Nun wird die Bautrommel 10 expandiert und gleichzeitig werden die beiden Kernklemmvorrichtung 14 in Richtung Bautrommel 10 bewegt, um die Wulstkerne 3 nachzuführen. Die Bewegung der Balgträger 14 wird mit der Expansionsbewegung der Bautrommel 10 entsprechend synchronisiert, insbesondere auch, um die Karkasseinlage gezielt in eine gewisse Spannung zu versetzen. Zusätzlich kann vorgesehen werden, den Karkassschlauch 12 von innen, über den Innenraum der Bautrommel 10, mittels Druckluft oder dergleichen in Spannung zu versetzen. Fig. 2d zeigt die Lage nach der Expansion, die Pfeile P₁ bis p₃ versinnbildlichen die durchgeführten Bewegungen der Balgträger 14 und der Segmente der Bautrommel 10. Dabei ist die Manschette 17 bereits aufgeblasen dargestellt. Das Gürtelpaket 5 wird auf diese Weise gemäß der Kontur der Außenseite der Bautrommel 10 geformt. Anschließend werden die Luft aus der Manschette 17 entlassen und die Transfereinrichtung 16 entfernt. Fig. 2e zeigt dieses Stadium des Reifenaufbaues.

Bei der in Fig. 2a bis 2e gezeigten Ausführung erfolgt die Formung der Kontur des Gürtelpaketes 5 auf der expandierten Bautrommel 10 mittels der aufgeblasenen Manschette 17. Der Durchmesser der expandierten Bautrommel 10 im Zenit entspricht daher dem Innendurchmesser des Gürtelpaketes 5. Bei einer anderen, gesondert nicht dargestellten Ausführung, kann die Manschette entfallen, indem die Bautrommel 10 selbst die Verformung des Gürtelpaketes 5 durchführt. Dazu wird vorgesehen, dass die nicht dargestellten Greifelemente der Transfereinrichtung radial verfahren werden können oder alternativ dazu entsprechend elastisch verformbar sind. Der Durchmesser der expandierten Bautrommel 10 in deren Schulterbereichen entspricht dem Innendurchmesser des noch unverformten Gürtelpaketes 5. Das Gürtelpaket 5 wird daher durch die Expansion der Bautrommel 10 über die gesamte Gürtelbreite gedehnt und derart in erwünschter Weise konturiert.

Bei einer weiteren, nicht gezeigten Ausführungsform der Erfindung ist der Durchmesser der expandierten Bautrommel im Zenit größer und in den Schulterbereichen kleiner als der Innendurchmesser des noch unverformten Gürtelpaketes 5. Bei dieser Ausführung wird das Gürtelpaket 5 durch die Expansionsbewegung der Bautrommel 10 im Zenit gedehnt, in den Schulterbereichen wird mittels der aufgeblasenen Manschette 17 der Transfereinrichtung 16 das Gürtelpaket 5 gestaucht und derart konturiert.

Fig. 3a bis 3c zeigen anhand schematischer Darstellungen Möglichkeiten des Aufbringens einer Spulbandage auf das bereits konturierte Gürtelpaket 5. Dabei ist jeweils nur der konturierte Außenbereich der Bautrommel 10 im Schnitt mit den zugehörigen Bauteilen des Reifens dargestellt. Eine Spulbandage wird bei rotierender Bautrommel 10 durch kontinuierliches Wickeln eines oder mehrerer Streifen(n) 19 spiralig über den Außenumfang des Gürtelpaketes 5 aufgebracht, um ein unerwünschtes Umfangswachstum des Reifens bei hohen Geschwindigkeiten zu verhindern. Der Streifen 19 besteht aus in eine Gummimischung eingebetteten und in Längsrichtung des Streifens 19 verlaufenden wärmeschrumpffähigen textilen Festigkeitsträgern. Die Festigkeitsträger können beispielsweise Nylonfäden sein, wobei mehrere Fäden pro Zentimeter Bandagenbreite verwendet werden, insbesondere 7 bis 12 Fäden pro Zentimeter. Der Bandagestreifen 19 selbst hat üblicher Weise eine Breite von 10 bis 15 mm und wird über eine geeignete Einrichtung automatisch zugeführt. Diese Einrichtung ist nicht Gegenstand der Erfindung und nicht dargestellt. Gezeigt ist jeweils lediglich ein Spulkopf 18, 18', 18", also jener Teil der Einrichtung, welcher den Bandagestreifen 19 auf dem Gürtelpaket 5 auflegt. Soll die Bandage mit mehreren Streifen 19 erstellt werden, ist eine entsprechende Anzahl von Spulköpfen vorzusehen.

Erwähnt sei ferner, dass die einzelnen Windungen des Bandagestreifens 19 Stoß an Stoß oder auch überlappend aufgebracht werden können und es ist abschnittsweise oder über die gesamte Breite des Gürtelpaketes ein Wickeln von mehreren Lagen von Bandagestreifen 19 möglich. Die Art der Wicklung bzw. das Wickelbild und die Anzahl etwaiger Lagen sind nicht Gegenstand der Erfindung.

Fig. 3a bis 3c zeigen unterschiedliche Möglichkeiten der Durchführung der Bewegung des Spulkopfes 18, 18', 18" bzw. der Spulköpfe (falls mehrere vorgesehen sind), zwei Windungen des Streifens 19 sind angedeutet. Gemäß Fig. 3a ist eine Bewegung des Spulkopfes 18 parallel zur Trommelachse a vorgesehen. Das Spulen der Bandage erfolgt daher anlag zum Spulen auf einer zylindrischen Gürteltrommel, ähnlich zum herkömmlichen Aufbauverfahren und hat daher den Vorteil, dass bereits vorhandenes Equipment verwendet werden kann.

Fig. 3b zeigt eine Variante, bei der eine Bewegung des Spulkopfes 18' parallel zur Kontur der Trommeloberfläche bzw. des aufgebrachten Gürtelpaketes 5 durchgeführt wird. Die Orientierung des Spulkopfes 18' ist normal zur Trommellängsachse a. Fig. 3c zeigt eine Ausführungsform, bei der der Spulkopf 18" der Trommeloberfläche bzw. der Kontur des aufgebrachten Gürtelpaketes folgt, zusätzlich ist jedoch eine variable Anstellung des Spulkopfes 18", vorzugsweise zur Trommeloberfläche bzw. der Oberfläche des Gürtelpaketes 5 möglich.

Die in Fig. 3b und Fig. 3c gezeigten Varianten haben den Vorteil einer besseren Spulqualität durch den gleichbleibenden Abstand des Spulkopfes 18', 18" zur Trommeloberfläche bzw. zur Oberfläche des Gürtelpaketes 5. Bei der in Fig. 3c gezeigten Variante ist es zusätzlich von Vorteil, dass eine konstante Spannung innerhalb des Bandagestreifens eine qualitativ besonders hochwertige Aufbringung der Spulbandage ermöglicht.

Nach dem Aufbringen des Gürtelpaketes 5 und der Spulbandage wird der Reifen fertig aufgebaut und auf herkömmliche Weise in einer Vulkanisationsform geheizt.

Bei sämtlichen Varianten kann die Spulspannung durch geeignete und bekannte Maßnahmen variiert werden. Üblicherweise ist es erwünscht, wenn die Spannung der Bandage in den Schulterbereichen höher ist als im mittleren Bereich. Bei einer möglichen Ausführungsform der Erfindung kann die Bautrommel 10 derart konturiert sein, dass das Gürtelpaket 5 und somit die auf dieses aufgebrachte Bandage beim Einformen des fertigen Rohreifens in die Vulkanisationsform eine Resterhebung haben, die in den Schulterbereichen etwas größer ist als im mittleren Bereich des Gürtelpaketes. Damit wird die Spannung der Bandage in den Schulterbereichen über die Resterhebung erhöht.

## Patentansprüche

1. Verfahren zum Aufbauen eines Radialreifens mit den Schritten
- Aufbau eines Gürtelpaketes aus mindestens zwei insbesondere automatisch gespleißten Gürtellagen auf einer einen zylindrischen Außenumfang aufweisenden, segmentierten Gürtelaufbautrommel, ,
- Aufbau eines eine luftdichte Innenschicht, zumindest eine Karkasseinlage und zwei Wulstkerne mit Kernprofilen aufweisenden Karkassschlauches auf einer weiteren Aufbautrommel,
- Transferieren des Karkassschlauches auf eine weitere, segmentierte Bautrommel, an welche seitlich in axialer Richtung bewegbare Balgträger mit aufblähbaren Bälgen anschließen,
- Transferieren des Gürtelpaketes zur weiteren Bautrommel und Positionieren desselben über dem Karkassschlauch,
**dadurch gekennzeichnet,**
**dass** die weitere Bautrommel (10) an ihrer Außenseite abgestimmt auf die oder ähnlich der vorgesehene(n) Querschnittskontur des Gürtelpaketes (5) im fertigen Reifen eine runde Querschnittskontur aufweisend geformt ist, wobei der Normalabstand der Außenseite der Segmente zur Achse der Bautrommel (10) im Zenit am größten und in den seitlichen Berechen am kleinsten ist, und dass der Karkassschlauch (12) durch Expansion der weiteren Bautrommel (10) mit dem Gürtelpaket (5) derart zusammengefügt wird, dass das Gürtelpaket (5) durch die Bautrommel (10) und / oder eine von außen mit dem Gürtelpaket (5) in Kontakt bringbare Einrichtung konturiert bzw. geformt wird.

2. Verfahren nach Anspruch 1, **dadurch gekennzeichnet, dass** durch die auf das Gürtelpaket (5) von außen einwirkende Einrichtung das Gürtelpaket (5) zumindest schulterseitig konturiert bzw. geformt wird.

3. Verfahren nach Anspruch 1 oder 2, **dadurch gekennzeichnet, dass** die Einrichtung eine das Gürtelpaket (5) umhüllende, insbesondere aufblasbare Gummimanschette (17) oder dergleichen ist, deren Innenseite im aufgeblasenen Zustand eine der erwünschten Querschnittskontur des Gürtelpaketes (5) entsprechende Kontur annimmt.

4. Verfahren nach einem der Ansprüche 1 bis 3, **dadurch gekennzeichnet, dass** die auf das Gürtelpaket (5) von außen einwirkende Einrichtung an der Transfereinrichtung (16) angeordnet ist.

5. Verfahren nach einem der Ansprüche 1 bis 4, **dadurch gekennzeichnet, dass** die Balgträger (14) bei der Expansion der Bautrommel (10) an diese seitlich herangefahren werden.

6. Verfahren nach einem der Ansprüche 1 bis 5, **dadurch gekennzeichnet, dass** die Karkasseinlage (2) währen der Expansion der Bautrommel (10) unter Spannung gesetzt wird.

7. Verfahren nach einem der Ansprüche 1 bis 6, **dadurch gekennzeichnet, dass** auf das konturierte Gürtelpaket (5) eine Spulbandage aus einem oder mehreren mit Festigkeitsträgern versehenen Materialstreifen mittels eines Spulkopfes (18, 18', 18") oder mehrerer Spulköpfe spiralig gewickelt wird.

8. Verfahren nach Anspruch 7, **dadurch gekennzeichnet, dass** der Spulkopf (18) oder die Spulköpfe zum spiraligen Wickeln des Materialstreifens (19) parallel zur Achse der rotierenden Bautrommel (10) bewegt wird bzw. werden.

9. Verfahren nach Anspruch 7, **dadurch gekennzeichnet, dass** der Spulkopf (18', 18") oder die Spulköpfe zum spiraligen Wickeln des Materialstreifens (19) der Kontur des Gürtelpaketes (5) folgend bewegt wird bzw. werden.

10. Verfahren nach Anspruch 9, **dadurch gekennzeichnet, dass** der Spulkopf (18"') bzw. die Spulköpfe senkrecht zur Oberfläche des konturierten Gürtelpaketes (5) angestellt bzw. ausgerichtet werden.

11. Vorrichtung zum Aufbau eines Radialreifens
- mit einer einen zylindrischen Außenumfang aufweisenden, segmentierten Gürtelaufbautrommel,
- einer weiteren Aufbautrommel zum Aufbau eines Karkassschlauches aus zumindest einer luftdichten Innenschicht, einer Karkasseinlage und zwei Wulstkernen mit Kernprofilen,
- einer Transfereinrichtung zum Transferieren des Gürtelpaketes von der Gürtelaufbautrommel zu einer weiteren, segmentierten Bautrommel,
- auf welcher der Karkassschlauch und das fertige Gürtelpaket zusammenfügbar sind,
- wobei seitlich der weiteren Bautrommel axial bewegbare Balgträger angeordnet sind,
**dadurch gekennzeichnet,**
**dass** die weitere Bautrommel (10) an ihrer Außenseite abgestimmt auf die oder ähnlich der Kontur des Gürtelpaketes (5) im fertigen Reifen eine runde Querschnittskontur aufweisend geformt ist, wobei der Normalabstand der Außenseite der Segmente zur Achse der Bautrommel (10) im Zenit am größten und in den seitlichen Berechen am kleinsten ist, und dass der Karkassschlauch (12) bei expandierter Bautrommel (10) mit dem Gürtelpaket (5) unter Verformung desselben zusammenfügbar ist.

12. Vorrichtung nach Anspruch 11, **dadurch gekennzeichnet, dass** die weitere Bautrommel (10) an ihrer Außenseite derart geformt ist, dass bei der Einformung des fertigen Rohreifens in eine Vulkanisationsform die Resterhebung in den Schulterbereichen größer ist als im Zenitbereich.

13. Vorrichtung nach Anspruch 11 oder 12, **dadurch gekennzeichnet, dass** eine auf das Gürtelpaket (5) von außen heran bringbare Einrichtung vorgesehen ist, deren Innenseite gemäß der vorgesehenen Kontur des Gürtelpaketes (5) geformt ist oder formbar ist.

14. Vorrichtung nach Anspruch 13, **dadurch gekennzeichnet, dass** die Einrichtung eine an der Transfereinrichtung (16) angeordnete aufblasbare, das Gürtelpaket umhüllbare Gummimanschette (17) ist, welche im aufgeblasenen Zustand eine der erwünschten Querschnittskontur des Gürtelpaketes (5) entsprechende Innenkontur annimmt.

15. Vorrichtung nach einem der Ansprüche 11 bis 14, **dadurch gekennzeichnet, dass** die Transfereinrichtung (16) Greifeinrichtungen zum Erfassen des Gürtelpaketes (5) aufweist.

16. Vorrichtung nach einem der Ansprüche 11 bis 15, **dadurch gekennzeichnet, dass** eine einen Spulkopf (18, 18', 18") oder mehrere Spulköpfe aufweisende Einrichtung zum Aufbringen einer Spulbandage auf das konturierte Gürtelpaket (5) vorgesehen ist.

17. Vorrichtung nach Anspruch 16, **dadurch gekennzeichnet, dass** der Spulkopf (18) oder die Spulköpfe normal zur Achse der Bautrommel (10) ausgerichtet und bewegbar ist bzw. sind.

18. Vorrichtung nach Anspruch 16, **dadurch gekennzeichnet, dass** der Spulkopf (18', 18") oder die Spulköpfe parallel zur Außenkontur des Gürtelpaketes (5) bewegbar ist bzw. sind.

19. Vorrichtung nach Anspruch 18, **dadurch gekennzeichnet, dass** der Spulkopf (18") oder die Spulköpfe normal zur Außenkontur des Gürtelpaketes (15) ausrichtbar ist bzw. sind.

## Claims

1. Method for building a radial tyre, comprising the following steps
- building a breaker belt package from at least two, in particular automatically spliced, belt plies on a segmented belt-building drum having a cylindrical outer circumference,
- building a carcass tube, having an airtight inner layer, at least one carcass insert and two bead cores with bead fillers, on a further building drum,
- transferring the carcass tube onto a further, segmented building drum, laterally adjoining which are axially movable bladder supports with inflatable bladders,
- transferring the belt package to the further building drum and positioning the same over the carcass tube,
**characterized**
**in that** the further building drum (10) is shaped on its outer side so as to match or be similar to the intended cross-sectional contour of the belt package (5) in the finished tyre, having a round cross-sectional contour, the normal distance of the outer side of the segments in relation to the axis of the building drum (10) being greatest at the zenith and smallest in the lateral regions, and in that the carcass tube (12) is joined together with the belt package (5) by expansion of the further building drum (10) in such a way that the belt package (5) is contoured or shaped by the building drum (10) and/or a device that can be brought into contact with the belt package (5) from the outside.

2. Method according to Claim 1, **characterized in that** the belt package (5) is contoured or shaped, at least on the shoulder side, by the device which acts on the belt package (5) from the outside.

3. Method according to Claim 1 or 2, **characterized in that** the device is a rubber sleeve (17) or the like enveloping the belt package (5), in particular an inflatable rubber sleeve, the inner side of which in the inflated state assumes a contour corresponding to the desired cross-sectional contour of the belt package (5).

4. Method according to one of Claims 1 to 3, **characterized in that** the device acting on the belt package (5) from the outside is arranged on the transfer device (16).

5. Method according to one of Claims 1 to 4, **characterized in that**, when the building drum (10) expands, the bladder supports (14) are brought up laterally to it.

6. Method according to one of Claims 1 to 5, **characterized in that** the carcass insert (2) is subjected to tension during the expansion of the building drum (10).

7. Method according to one of Claims 1 to 6, **characterized in that** a winding bandage comprising one or more strips of material provided with reinforcing elements is wound spirally onto the contoured belt package (5) by means of a winding head (18, 18', 18'') or a number of winding heads.

8. Method according to Claim 7, **characterized in that** the winding head (18) or the winding heads for the spiral winding of the strip of material (19) is or are moved parallel to the axis of the rotating building drum (10).

9. Method according to Claim 7, **characterized in that** the winding head (18', 18") or the winding heads for the spiral winding of the strip of material (19) is or are moved in such a way as to follow the contour of the belt package (5).

10. Method according to Claim 9, **characterized in that** the winding head (18"') or the winding heads is or are adjusted or aligned perpendicularly to the surface of the contoured belt package (5).

11. Apparatus for building a radial tyre comprising
- a segmented belt-building drum having a cylindrical outer circumference,
- a further building drum for building a carcass tube from at least one airtight inner layer, a carcass insert and two bead cores with bead fillers,
- a transfer device for transferring the belt package from the belt-building drum to a further, segmented building drum,
- on which the carcass tube and the finished belt package can be joined together,
- axially movable bladder supports being arranged to the sides of the further building drum,
**characterized**
**in that** the further building drum (10) is shaped on its outer side so as to match or be similar to the contour of the belt package (5) in the finished tyre, having a round cross-sectional contour, the normal distance of the outer side of the segments in relation to the axis of the building drum (10) being greatest at the zenith and smallest in the lateral regions, and in that the carcass tube (12) can be joined together with the belt package (5) when the building drum (10) is expanded, in such a way that the said belt package (5) is deformed.

12. Apparatus according to Claim 11, characterising that the further building drum (10) is shaped on its outer side in such a way that, when the finished green tyre is moulded into a vulcanizing mould, the residual elevation is greater in the shoulder regions than in the zenith region.

13. Apparatus according to Claim 11 or 12, **characterized in that** a device which can be brought up to the belt package (5) from the outside is provided, the underside of which device is or can be shaped according to the intended contour of the belt package (5).

14. Apparatus according to Claim 13, **characterized in that** the device is an inflatable rubber sleeve (17), which is arranged on the transfer device (16), can envelop the belt package and in the inflated state assumes an inner contour corresponding to the desired cross-sectional contour of the belt package (5).

15. Apparatus according to one of Claims 11 to 14, **characterized in that** the transfer device (16) has gripping devices for taking hold of the belt package (5).

16. Apparatus according to one of Claims 11 to 15, **characterized in that** a device having a winding head (18, 18', 18") or a number of winding heads is provided for applying a winding bandage to the contoured belt package (5).

17. Apparatus according to Claim 16, **characterized in that** the winding head (18) or the winding heads is or are aligned and can be moved normally to the axis of the building drum (10).

18. Apparatus according to Claim 16, **characterized in that** the winding head (18', 8'') or the winding heads can be moved parallel to the outer contour of the belt package (5).

19. Apparatus according to Claim 18, **characterized in that** the winding head (18") or the winding heads can be aligned normally to the outer contour of the belt package (15).

## Revendications

1. Procédé pour fabriquer un pneu radial, comprenant les étapes suivantes :
- construction d'un paquet d'armature constitué d'au moins deux nappes d'armature soudées notamment automatiquement, sur un tambour de construction d'armature segmenté présentant une périphérie extérieure cylindrique,
- construction d'un tube de carcasse présentant une couche interne étanche à l'air, un insert de carcasse et deux tringles avec des profils de tringle, sur un autre tambour de construction,
- transfert du tube de carcasse sur un autre tambour de construction segmenté, auquel se raccordent des porte-soufflets déplaçables latéralement dans la direction axiale avec des soufflets gonflables,
- transfert du paquet d'armature à un autre tambour de construction et positionnement de ce dernier sur le tube de carcasse,
**caractérisé en ce que**
l'autre tambour de construction (10) est formé de manière à présenter sur son côté extérieur, un contour en section transversale rond adapté au contour ou similaire au contour en section transversale prévu du paquet d'armature (5) dans le pneu fini, la distance normale du côté extérieur des segments à l'axe du tambour de construction (10) étant maximale au zénith et étant minimale dans les régions latérales, et **en ce que** le tube de carcasse (12) est assemblé par expansion de l'autre tambour de construction (10) avec le paquet d'armature (5) de telle sorte que le paquet d'armature (5) soit formé ou acquière son contour par le tambour de construction (10) et/ou par un dispositif pouvant être amené en contact depuis l'extérieur avec le paquet d'armature (5).

2. Procédé selon la revendication 1, **caractérisé en ce que** le paquet d'armature (5) est formé ou acquiert son contour au moins du côté de l'épaulement par le dispositif agissant depuis l'extérieur sur le paquet d'armature (5).

3. Procédé selon la revendication 1 ou 2, **caractérisé en ce que** le dispositif est une manchette en caoutchouc (17) ou similaire enveloppant le paquet d'armature (5), en particulier gonflable, dont le côté interne, dans l'état gonflé, acquiert un contour correspondant au contour souhaité en section transversale du paquet d'armature (5).

4. Procédé selon l'une quelconque des revendications 1 à 3, **caractérisé en ce que** le dispositif agissant depuis l'extérieur sur le paquet d'armature (5) est disposé sur le dispositif de transfert (16).

5. Procédé selon l'une quelconque des revendications 1 à 4, **caractérisé en ce que** les porte-soufflets (14), lors de l'expansion du tambour de construction (10), sont rapprochés latéralement de celui-ci.

6. Procédé selon l'une quelconque des revendications 1 à 5, **caractérisé en ce que** l'insert de carcasse (2) est mis sous tension lors de l'expansion du tambour de construction (10).

7. Procédé selon l'une quelconque des revendications 1 à 6, **caractérisé en ce que** sur le paquet d'armature (5) pourvu de son contour est enroulé en spirale un bandage d'enroulement en un ou plusieurs rubans de matériau pourvus de renforts, au moyen d'une tête d'enroulement (18, 18', 18") ou de plusieurs têtes d'enroulement.

8. Procédé selon la revendication 7, **caractérisé en ce que** la tête d'enroulement (18) ou les têtes d'enroulement sont déplacées pour l'enroulement en spirale du ruban de matériau (19) parallèlement à l'axe du tambour de construction (10) en rotation.

9. Procédé selon la revendication 7, **caractérisé en ce que** la tête d'enroulement (18', 18") ou les têtes d'enroulement sont déplacées pour l'enroulement en spirale du ruban de matériau (19) en suivant le contour du paquet d'armature (5).

10. Procédé selon la revendication 9, **caractérisé en ce que** la tête d'enroulement (18"') ou les têtes d'enroulement sont inclinées ou orientées perpendiculairement à la surface du paquet d'armature (5) pourvu de son contour.

11. Dispositif pour la construction d'un pneu radial,
- comprenant un tambour de construction d'armature segmenté présentant une circonférence extérieure cylindrique,
- un autre tambour de construction pour construire un tube de carcasse constitué d'au moins une couche interne étanche à l'air, d'un insert de carcasse et de deux tringles avec des profils de tringle,
- un dispositif de transfert pour transférer le paquet d'armature du tambour de construction d'armature à un autre tambour de construction segmenté,
- sur lequel le tube de carcasse et le paquet d'armature fini peuvent être assemblés,
- des porte-soufflets déplaçables axialement étant disposés latéralement à l'autre tambour de construction,
**caractérisé en ce que**
l'autre tambour de construction (10) est formé de manière à présenter sur son côté extérieur, un contour en section transversale rond adapté au contour ou similaire au contour en section transversale prévu du paquet d'armature (5) dans le pneu fini, la distance normale du côté extérieur des segments à l'axe du tambour de construction (10) étant maximale au zénith et étant minimale dans les régions latérales, et **en ce que** le tube de carcasse (12) peut être assemblé lorsque le tambour de construction (10) est expansé, avec le paquet d'armature (5), par déformation de ce dernier.

12. Dispositif selon la revendication 11, **caractérisé en ce que** l'autre tambour de construction (10) est formé sur son côté extérieur de telle sorte que dans le cas du moulage du pneu brut fini dans un moule de vulcanisation, le rehaussement résiduel soit plus grand dans les régions d'épaulement que dans la région du zénith.

13. Dispositif selon la revendication 11 ou 12, **caractérisé en ce que** qu'un dispositif pouvant être rapproché du paquet d'armature (5) depuis l'extérieur est prévu, dont le côté interne est formé ou peut être formé en fonction du contour prévu pour le paquet d'armature (5).

14. Dispositif selon la revendication 13, **caractérisé en ce que** le dispositif est une manchette en caoutchouc (17) pouvant envelopper le paquet d'armature, pouvant être gonflée et disposée sur le dispositif de transfert (16), qui, dans l'état gonflé, acquiert un contour correspondant au contour souhaité en section transversale du paquet d'armature (5).

15. Dispositif selon l'une quelconque des revendications 11 à 14, **caractérisé en ce que** le dispositif de transfert (16) présente des dispositifs de préhension pour saisir le paquet d'armature (5).

16. Dispositif selon l'une quelconque des revendications 11 à 15, **caractérisé en ce qu'**un dispositif présentant une tête d'enroulement (18, 18', 18") ou plusieurs têtes d'enroulement est prévu pour appliquer un bandage d'enroulement sur le paquet d'armature pourvu de son contour (5).

17. Dispositif selon la revendication 16, **caractérisé en ce que** la tête d'enroulement (18) ou les têtes d'enroulement sont orientées et peuvent se déplacer perpendiculairement à l'axe du tambour de construction (10).

18. Dispositif selon la revendication 16, **caractérisé en ce que** la tête d'enroulement (18', 18'') ou les têtes d'enroulement peuvent se déplacer parallèlement au contour extérieur du paquet d'armature (5).

19. Dispositif selon la revendication 18, **caractérisé en ce que** la tête d'enroulement (18") ou les têtes d'enroulement peuvent être orientées perpendiculairement au contour extérieur du paquet d'armature (15).
